# EUROPEAN PATENT SPECIFICATION

(11) **EP 1 791 342 B1**
(45) Date of publication and mention of the grant of the patent: **08.07.2015**
(21) Application number: 06256032.1
(22) Date of filing: 24.11.2006
(51) Int. Cl.: H04N 1/03, G02B 7/02, G02B 13/24, G03G 21/20

(54) **An image forming apparatus having an optical unit and an image reading device capable of preventing deterioration of image reading accuracy**
Bilderzeugungsvorrichtung mit einer optischen Einheit und einer Bildlesevorrichtung mit der Fähigkeit, die Verschlechterung der Bildlesegenauigkeit zu vermeiden
Appareil de formation d'images doté d'une unité optique et dispositif de lecture d'images capable d'éviter la détérioration de la précision de lecture d'images

(30) Priority: 28.11.2005 JP 2005341992
(43) Date of publication of application: 30.05.2007
(73) Proprietor: Ricoh Company, Ltd., Tokyo 143-8555 (JP)
(72) Inventor: Yamazaki, Kohichi, Ohta-ku Tokyo 143-8555 (JP); Kimura, Tetsuya c/o Ricoh Company Ltd.,, Ohta-ku Tokyo 143-8555 (JP); Kusumoto, Hiroshi c/o Ricoh Company Ltd.,, Ohta-ku Tokyo 143-8555 (JP); Nagao, Yoshiaki c/o Ricoh Company Ltd.,, Ohta-ku Tokyo 143-8555 (JP); Shimazu, Takehisa c/o Ricoh Company Ltd.,, Ohta-ku 143-8555 (JP)
(74) Representative: Mounteney, Simon James

(56) References cited:
- EP-A- 0 418 586
- US-A- 5 412 510
- US-A- 5 570 238
- US-A- 6 122 009
- US-A1- 2005 200 980

## Description

### BACKGROUND

### FIELD

The present invention generally relates to an optical unit, an image reading device and image forming apparatus using the same, and more particularly to an image forming apparatus that includes an optical unit and an image reading unit which prevent deterioration of reading accuracy of an image, even if a holding member, which support a lens unit and an image pick-up device, is thermally expanded.

### DISCUSSION OF THE BACKGROUND

In an image reading device provided in a copier, a facsimile, a multi-functional machine and so forth, light is emitted on a document surface from a light source, and the reflected light from the document is entered in a lens unit through a plurality of mirrors. The lens unit forms an image on an image pick-up device such as a CCD line sensor or the like so as to convert the reflected light to an electric signal. Accordingly, the document is being read.

In order to accurately image the light reflected from the document surface, focused by the lens unit, on an element surface of the image pick-up device, highly precise positioning of a distance between the lens unit and the image pick-up device will be needed. In a related art image reading apparatus, according to Japanese Patent Laid-Open Application Publication No. JP2005-217500, for example, a supporting member, which supports the lens unit and the image pick-up device, is provided with a protruding member so that the lens unit and the image pick-up device are accurately positioned.

However, in such a related art image reading apparatus, due to a rise of the temperature of devices surrounding the image pick-up device or the image reading apparatus, the supporting member which supports the lens unit and the image pick-up device may expand. As a result, the positional relationship between the lens unit and the image pick-up device may be altered, thereby causing a problem such as a decrease in a Modulation Transfer Function (hereinafter referred to as MTF) which ultimately deteriorates reading accuracy of the image.

US 5 412 510 discloses an imaging optical system that compensates for changes of temperature by correcting a focal point for the entire optical system by changing a relative distance between a lens and a light receiving element.

US 6 122 009 discloses an image pick-up apparatus in which a change in focal length of an image forming lens is compensated for by selecting a material for a support structure that causes a variation falling within the depeth of field of the lens system.

### SUMMARY

In view of the foregoing, it is an object of the present invention to provide a novel image forming apparatus which includes an optical unit which effectively prevents deterioration of an image reading accuracy when a holding member which holds a lens unit and an image pick-up device is thermally expanded.

Accordingly, a first aspect of the invention provides an optical unit according to Claim 1. Preferred features of this aspect of the invention are set out in Claims 2 and 3. The invention also provides an image reading apparatus as set out in claim 4 and an image forming apparatus as set out in Claim 5.

### BRIEF DESCRIPTION OF THE DRAWINGS

A more complete appreciation of the disclosure and many of the attendant advantages thereof will be readily obtained as the same becomes better understood by reference to the following detailed description of exemplary embodiments when considered in connection with the accompanying drawings, wherein:
FIG. 1 is a schematic diagram illustrating an image forming apparatus according to a first exemplary embodiment of the present invention;
FIG. 2 is a perspective view illustrating an optical unit to which a cover is mounted according to the first exemplary embodiment of the present invention;
FIG. 3 is a perspective view illustrating the optical unit of FIG. 2 from which the cover is removed;
FIG. 4 is a top view of the optical unit;
FIG. 5 is a lateral cross-sectional view illustrating the optical unit;
FIG. 6 is a cross-sectional view illustrating a lens unit of an image reading apparatus of the first exemplary embodiment of the present invention;
FIG. 7 is a diagram for explaining a relationship between an MTF of each wavelength of RGB, and a distance between a lens and a CCD; and
FIG. 8 is a lateral cross-sectional view illustrating an optical unit according to a second exemplary embodiment of the present invention.

### DETAILED DESCRIPTION OF EXEMPLARY EMBODIMENTS

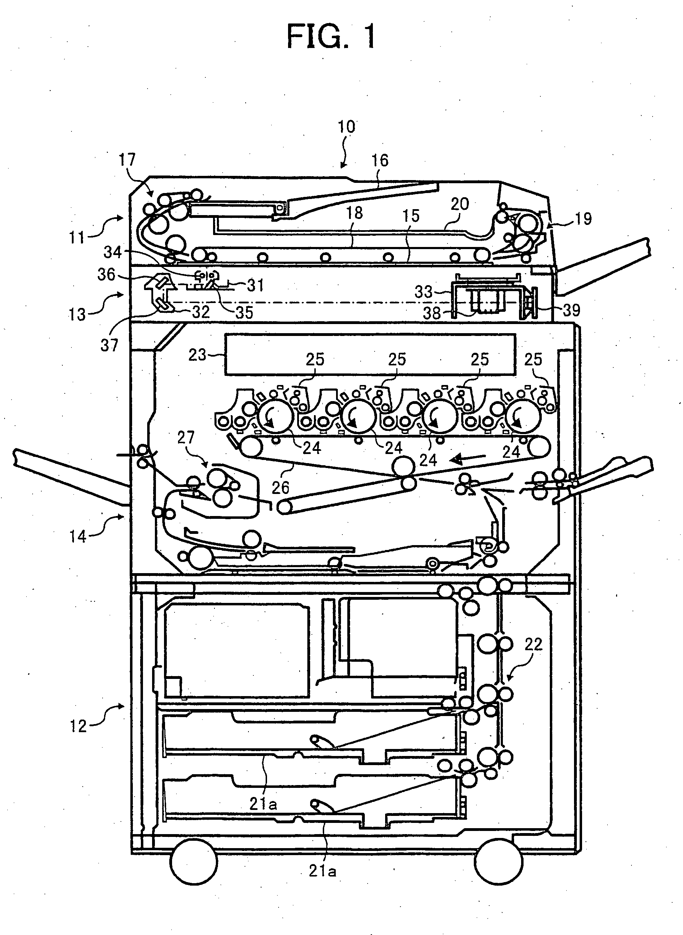

In describing exemplary embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner. For the sake of simplicity of drawings and descriptions, the same reference numerals are given to materials and constituent parts having the same functions, and descriptions thereof will be omitted unless otherwise stated. Exemplary embodiments of the present invention are now explained below with reference to the accompanying drawings. In the later described comparative example, exemplary embodiment, and alternative example, the same reference numerals will be given to constituent elements such as parts and materials having the same functions, and the descriptions thereof will be omitted. Referring now to the drawings, wherein like reference numerals designate identical or corresponding parts throughout the several views, particularly to FIG. 1, an image forming apparatus according to an exemplary embodiment of the present invention is described.

FIGs. 1 through 7 illustrate an optical unit, an image reading apparatus and an image forming apparatus of a first exemplary embodiment of the present invention. In the exemplary embodiment, an example in which the image forming apparatus is applied to a copier is shown. However, the image forming apparatus may not be limited to the copier. As long as the image forming apparatus includes an image reading apparatus, the image forming apparatus may be applied to apparatuses such as facsimiles, multifunctional apparatuses and so forth.

First, a description will be given of a structure of a copier serving as an image forming apparatus. In FIG. 1, a copier 10 serving as an image forming apparatus includes an automatic document feeder (hereinafter referred to as an ADF) 11, a paper feed unit 12, an image reading unit 13 serving as an image reading apparatus and an image forming unit 14 serving as an image forming unit.

The ADF 11 includes a contact glass 15, a document tray 16, a separation paper feed mechanism 17, a conveyance belt 18, a paper ejecting mechanism 19 and a catch tray 20. In the ADF 11, an original document placed on the document tray 16 is transported onto the contact glass 15 by the separation paper feed mechanism 17 which is equipped with various rollers such as a paper feed roller, a separation roller and so forth. The document being read is conveyed from the contract glass 15 by the conveyance belt 18, and then is ejected to the catch tray 20 by the paper ejecting mechanism 19.

In a case where both sides of the document are read, the document is sent back to the contact glass 15 by a branch mechanism and the conveyance belt 18 so as to read a surface which has not been read.

The paper feed unit 12 includes paper feed cassettes 21a and 21b, and a paper feed mechanism 22. The paper feed cassettes 21a and 21b store recording paper of different sizes. The paper feed mechanism 22 is equipped with various rollers which convey the recording paper stored in the paper feed cassettes 21a and 22b to a position where an image is formed.

The image reading unit 13 includes a first carriage 31, a second carriage 32 and an optical unit 33. As will be later described, when reading the document being transported onto the contact glass 15, the first carriage 31 and the second carriage 32 are secured at a lower left of the contact glass 15. When reading the document placed on the contact glass 15, the first carriage 31 and the second carriage 32 are moved in left and right directions in FIG. 1 at a lower part of the contact glass 15.

The image forming unit 14 includes an exposure device 23, a plurality of photoreceptor drums 24, a plurality of developing units 25, a transfer belt 26 and a fixing device 27. The exposure device 23 forms a write signal based on a read signal loaded in the optical unit 33. The write signal generated by the exposure apparatus 23 is formed on the surfaces of the photoreceptor drums 24. Toners of different colors are filled in the respective developing units 25. The developing units 25 supply the toners of different colors to each of the respective photoreceptor drums 24 so as to transform the write signal to a visible image. The visible images formed on the photoreceptor drums 24 are transferred in sequence so that a color image is formed. The transfer belt 26 transfers the color image to the recording paper supplied from the paper feed unit 12. The fixing unit 27 fixes the color image to the recording paper.

A light source 34 and a first mirror 35 are mounted inside the first carriage 31. The light source 34 is formed of a halogen lamp or the like and is configured to irradiate the document passing the contact glass 15 or the document placed thereon. Both end portions of a front side and a rear side of the first mirror 35 in FIG. 1 are supported by the first carriage 31 such that the light reflected from the document surface enters the first mirror 35.

In the second carriage 32, a second mirror 36 and a third mirror 37 are mounted. Both end portions of a front side and a rear side of the second mirror 36 and the third mirror 37 in FIG. 1 are supported by the second carriage 32 such that the light reflected from the first mirror 35 is sequentially reflected on the second mirror 36 and the third mirror 37.

Furthermore, a lens unit 38 and an image pick-up device 39 such as a CCD line sensor are mounted in the optical unit 33. A plurality of device surfaces are aligned in a scanning direction in the image pick-up device 39. After the light reflected from the third mirror 37 is focused by the lens unit 38, the light is imaged on the image pick-up device 39 and is converted to an analogue image signal corresponding to image data of the document surface.

A wire of a not-shown publicly known operating mechanism is provided to the first carriage 31 and the second carriage 32, and is slidably attached to a traveling rail which constitutes a part of a main frame of the image reading unit 13. The wire extends from side to side in the image reading unit 13 in FIG. 1.

In a case where the document placed on the contact glass 15 is read, the operating mechanism is operated in accordance with a signal requesting for image reading for each line, sent from a not-shown host computer of the copier 10 so as to move the wire from side to side in FIG. 1. Accordingly, the first carriage 31 and the second carriage 32 move along the document surface at a speed ratio of 2:1, respectively, while irradiating the light on the document surface on the contact glass 15 by the light source 34.

Therefore, the document surface is optically scanned in a subscanning direction. After the reflected light is sequentially reflected in the order of the first mirror 35, the second mirror 36 and the third mirror 37, the reflected light is imaged on the surface of the image pick-up device 39 through the lens unit 38. Accordingly, the document surface is read.

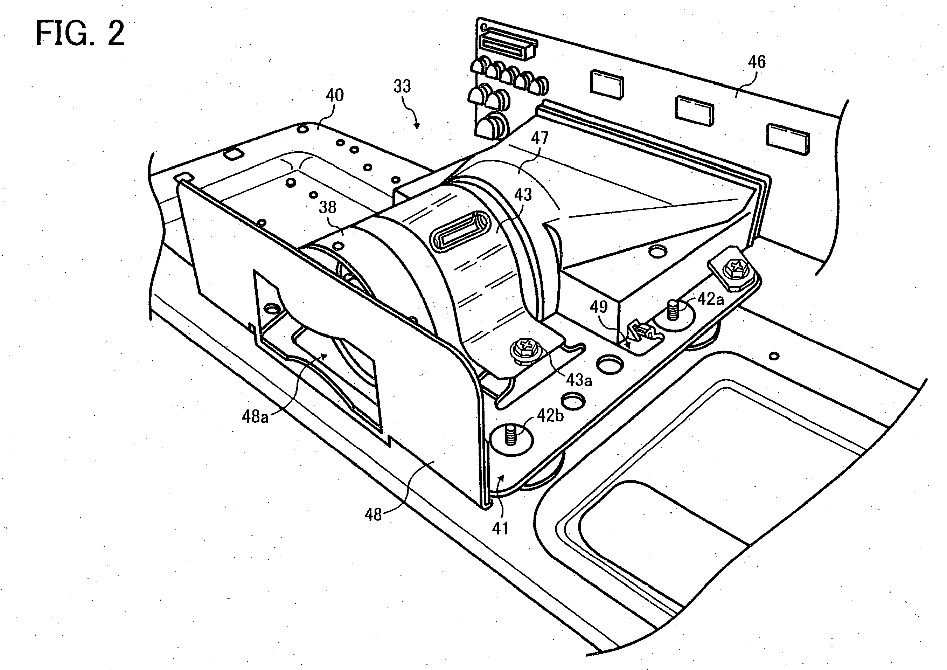

FIGs. 2 through 5 illustrate a structure of the optical unit 33. In FIGs. 2 through 5, a tabular supporting bracket or a supporting member 40 is formed of a sheet metal member and is mounted on a traveling rail 13a of the image reading unit 13 by bolts and the like. As described above, the first carriage 31 and the second carriage 32 are slidably mounted on the traveling rail 13a.

A sidewardly open U-shaped holding bracket 41, which is formed of a black steel plate as a sheet metal member, is attached to the supporting bracket 40. The holding bracket 41 is fastened to the supporting bracket 40 by two sets of bolts 42a and 42b. The bolts 42a and 42b are configured to separately be placed in an optical axis direction of the reflected light from the document surface, reflected from the third mirror 37.

The lens unit 38 is secured to the holding bracket 41 by a bracket 43 having a semicircular shape. Both end portions of the bracket 43 are secured to the holding bracket 41 by the bolts 43a.

The image pick-up device 39 is mounted on one end portion or the tip portion of the holding bracket 41. The image pick-up device 39 is adhered to protruding members 41a and 41b which are adhered to the tip of one end portion of the holding bracket 41 so that the image pick-up device 39 is firmly held by the holding bracket 41.

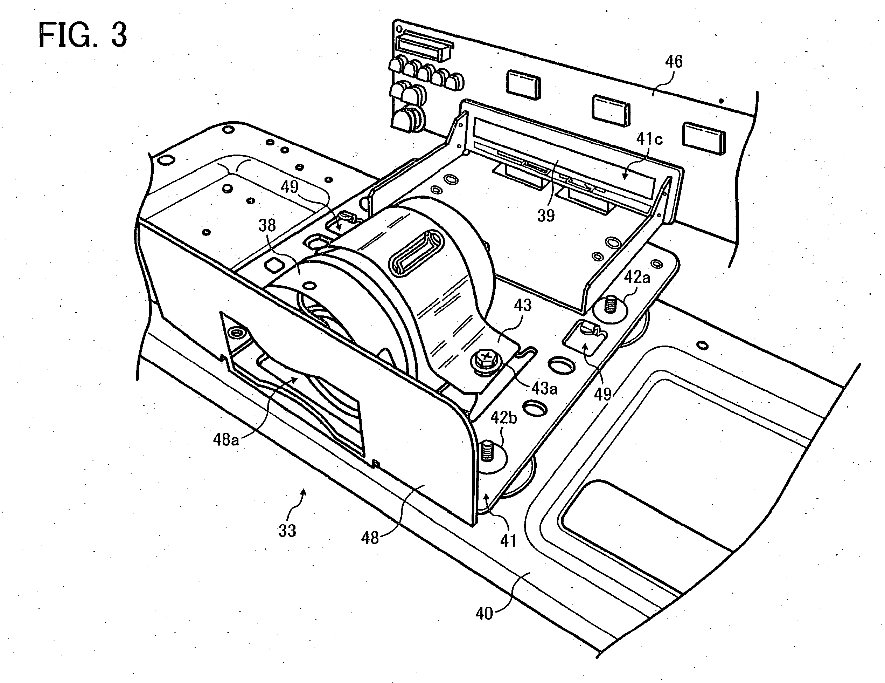

Furthermore, with reference to FIG. 3, an opening 41c is formed on one end portion or the tip portion of the holding bracket 41. The device surface of the image pick-up device 39 adhered to the protruding members 41a and 41b faces the lens unit 38 through the opening 41c. Therefore, the reflected light from the document focused on the lens unit 38 securely enters the device surface of the image pick-up device 39.

A circuit board 46 is installed on the image pick-up device 39. The circuit board 46 includes an analogue/digital converter, a binarization circuit, a multivalued circuit, a gradation processing circuit, a variable power circuit, an edit processing circuit and so forth. The circuit board 46 is configured such that the read data of the document, which is converted to an analogue signal by the image pick-up device 39, is converted to a digital image signal by the analogue/digital converter. Then, the binarization processing, multivalued processing, gradation processing, variable power processing and edit processing are performed so as to generate image data. The image data being generated is sent to the image forming unit 14.

As shown in FIG. 2, on the holding bracket 41, a cover 47 is mounted at a position between the lens unit 38 and the image pick-up device 39. The image pick-up device 39 is shaded with the cover 47. FIG. 3 illustrates the optical unit 33 before the cover 47 is mounted.

On the other end of the holding bracket 41, a shading correction member or a shading correction panel 48 is provided. On the shading correction member 48, an opening 48a for shading correction is provided at a position facing the lens unit 38. The opening 48a is formed such that both end portions of the opening 48a are broader in width than the central portion thereof.

Accordingly, the reflected light from the original document, which is reflected by the third mirror 37, is focused on the lens unit 38 after the image irregularity is corrected by the shading correction member 48. Subsequently, the reflected light from the original document is imaged on the image pick-up device 39

On the holding bracket 41, openings 49 for determination of a position of the image pick-up device 39 and the lens unit 38 are provided. The openings 49 are formed between the bolts 42a and 42b. The openings 49 are configured such that pins or the like of a not-shown assembling equipment may be inserted in the openings 49. When the optical unit 33 is assembled, the pins are inserted in the openings 49 so as to adjust the positions of an area from the openings 49 to the image pick-up device 39. Accordingly, the position of the image pick-up device 39 and the lens unit 38 is determined, and the image pick-up device 39 is adhered to the protruding members 41a and 41b.

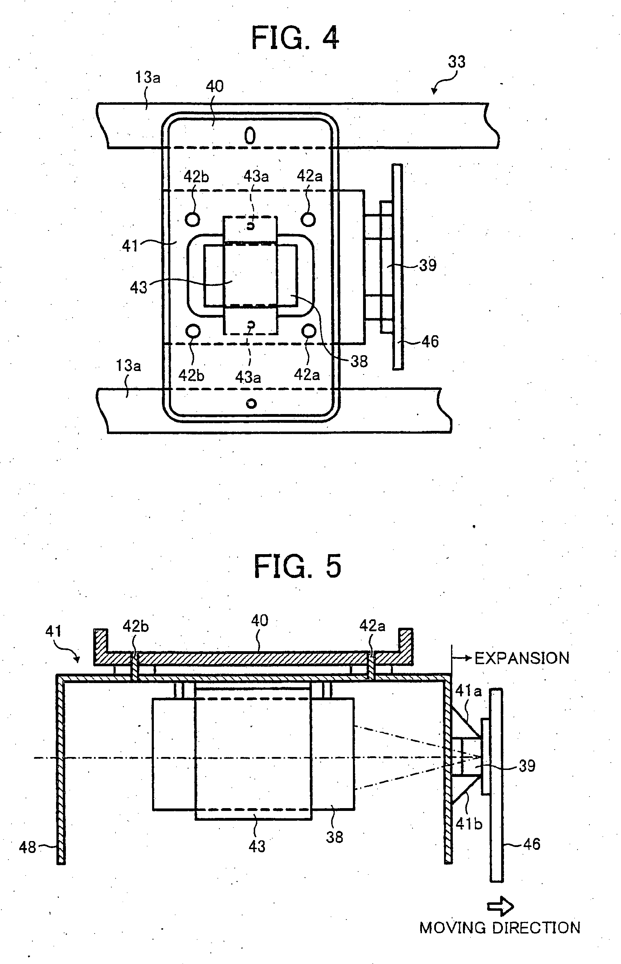

In the optical unit 33 structured in an above described manner, due to the emission of heat from the image pick-up device 39, and the emission of heat from the inside of the image reading unit 13 or the copier 10, the holding bracket 41 formed of the black steel plate may thermally be expanded. The amount of the thermal expansion of the holding bracket 41 is substantially small at a place between the bolts 42a and 42b which serve as a securing portion to secure the supporting bracket 40. However, the amount of the thermal expansion of the holding bracket 41 is relatively large on the outside of the bolts 42a and 42b. Consequently, due to the thermal expansion of the holding bracket 41, the image pick-up device 39 may move in an arrow direction in FIG. 5. That is, the image pick-up device 39 may move away from the lens unit 38. In other words, in a case where the distance between the image pick-up device 39 and the lens unit 38 is determined in a cold period during which the holding bracket 41 is not thermally expanded, and the temperature of the holding bracket 41 increases causing the thermal expansion thereof, the distance between the image pick-up device 39 and the lens unit 38 increases.

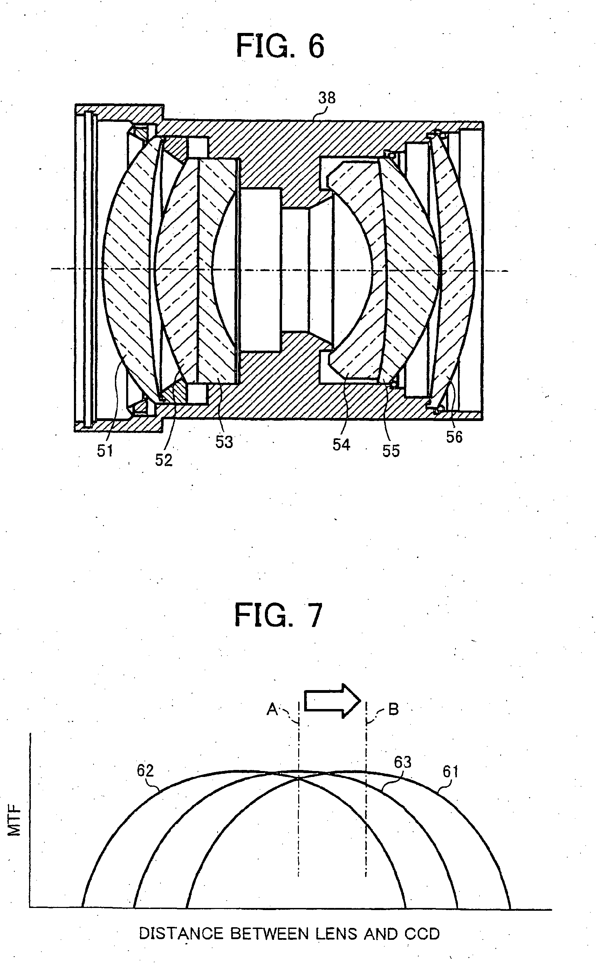

FIG. 6 is a cross sectional view illustrating the lens unit 38. The lens unit 38 includes a plurality of lenses 51, 52, 53, 54, 55 and 56. Converging lenses are used for the lenses 51, 52, 55 and 56. Diverging lenses are used for the lenses 53 and 54. The lens 52 and the lens 53 are adhered each other. The lens 54 and the lens 55 are also adhered each other. The lens unit 38 has a lens structure consisting of four groups of lenses using six lenses.

Reference is now made to TABLE 1 and TABLE 2 to explain the temperature dependency of lenses of different materials. TABLE 1 shows the temperature dependency of BACD4 which is a plastic lens manufactured by Hoya Corporation. TABLE 2 shows the temperature dependency of a glass lens which uses ZEONEX-E48R (registered trademark) manufactured by ZEON Corporation as a material.

**TABLE 1**

| TEMPERATURE COEFFICIENT OF REFLACTIVE INDEX (x10⁻⁶/K) | | |
|---|---|---|
| (°C) | (Δn/ ΔT)rel. | (Δn/ ΔT)abs. |
| -40/-20 | 2.4 | 0.2 |
| -20/0 | 2.5 | 0.6 |
| 0/+20 | 2.6 | 1.0 |
| +20/+40 | 2.6 | 1.2 |
| +40/+60 | 2.7 | 1.5 |
| +60/+80 | 2.8 | 1.7 |

.

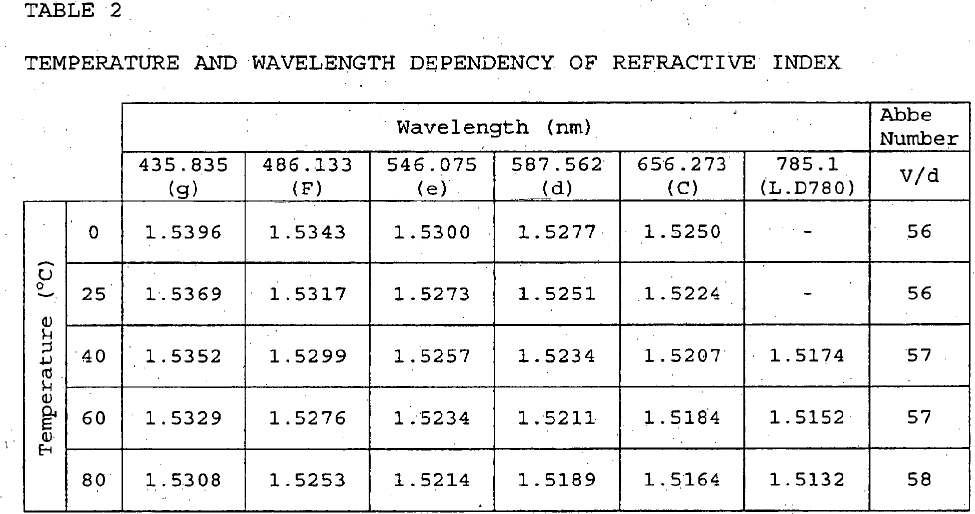

As shown in TABLE 1 and TABLE 2, when the temperature rises, the refractive index of the plastic lens and the glass lens normally decreases. In a case where the plastic lens and the glass lens are used for the converging lens so as to form a part of or all of the constituent elements of the lens unit 38, when the temperature is high, the refractive index decreases so that the focusing strength is weakened, compared with a case in which the temperature is low. Consequently, the focal length of the lens unit 38 becomes longer than that of the case in which the temperature is low.

On the other hand, in a case where the plastic lens and the glass lens are used for the diverging lens, the refractive index decreases so that the focal length of the lens unit 38 becomes shorter than that of a case in which the temperature is low. As shown in TABLE 1 and TABLE 2, when comparing the plastic lens with the glass lens, the temperature dependency of the plastic lens is greater than that of the glass lens, and the fluctuation of the refractive index due to a rise in the temperature becomes greater. The power of the lens, that is, the refracting strength of the lens becomes greater when the radius of the lens is small. Therefore, if the combination of the lens shape such as a diverging lens, converging lens and the radius of the lenses, and the material of the lens is set, it may be possible to select either the focal length is near or far, when the temperature of the lens rises. Furthermore, it may be possible to select an amount of the fluctuation of the focal length.

Therefore, in the lens unit 38 of the exemplary embodiment, the lens 51, which is a converging lens, is made of plastic having a high temperature dependency, while other lenses 52, 53, 54, 55 and 56 are made of glass having a low temperature dependency. Accordingly, the lens unit 38 is structured such that, in a case where the temperature rises, the focal length is extended. Furthermore, each radius of the lenses 51, 52, 53, 54, 55 and 56 is configured such that, in a case where the temperature rises, the amount of shift in the focal length corresponds to the amount of expansion of the holding bracket 41 due to heat.

The material and the radius of the lenses 51, 52, 53, 54, 55 and 56 may be configured such that the difference between the amount of shift in the focal length in a case where the temperature rises, and the amount of expansion of the holding bracket 41 due to heat falls within an effective focal depth. The effective focal depth herein refers to a region which is considered to be practically in-focus, and has the same meaning as a depth of field.

In the exemplary embodiment, plastic and glass are used as materials for the lenses 51, 52, 53, 54, 55 and 56. However, without limiting the materials to plastic and glass, lenses made of more than two different materials having different temperature dependencies may be assembled and used in the optical unit 33.

Next, with reference to FIG. 7, a description will be given of an effect of the shift in the distance between the lens unit 38 and the image pick-up device 39 to the Modulation Transfer Function (hereinafter referred to as MTF) of each wavelength of RGB. In FIG. 7, the fluctuation of the distance between the lens unit 38 and the image pick-up device 39 due to heat is indicated by an arrow. In the exemplary embodiment, RGB refers to the three primary colors, Red, Green and Blue. The distance between the lens unit 38 and the image pick-up device 39 is determined in such a manner that the distance is appropriate for all of the wavelengths of RGB during the cold period. In other words, the distance between the lens unit 38 and the image pick-up device 39 is determined such that the desired characteristics are satisfied. However, when the distance between the lens unit 38 and the image pick-up device 39 changes (in FIG. 7, the distance increases), the MTF may deviate from a predetermined value. As a result, image information with the RGB balance being out of balance may be obtained. Furthermore, in all of the three wavelengths of RGB, it may be difficult for the lens unit 38 to accurately form an image on the image pick-up device 39, after the distance between the lens unit 38 and the image pick-up device 39 changes due to a temperature fluctuation.

Thus, according to the exemplary embodiment of the present invention, the distance between the lens unit 38 and the image pick-up device 39 is set such that, in any of the wavelengths of RGB, the difference between the displacement amount of the distance between the lens unit 38 and the image pick-up device 39, and the displacement amount of the focal length of the lens unit 38 falls within the focal depth of the lens unit 38. Accordingly, the lens unit 38 and the image pick-up device 39 are assembled.

In any of the wavelengths of RGB, ideally, the difference between the displacement amount of the distance between the lens unit 38 and the image pick-up device 39, and the displacement amount of the focal length of the lens unit 38 falls within the focal depth of the lens unit 38. However, the adjustment for this particular purpose is difficult to perform. Thus, the lens unit 38 and the image pick-up device 39 are assembled such that the difference between the displacement amount of the distance between the lens unit 38 and the image pick-up device 39, and the displacement amount of the focal length of the lens unit 38 falls within the focal depth of the lens unit 38 in the wavelengths which the fluctuation of the distance between the lens unit 38 and the image pick-up device 39 most affects, that is, the wavelengths in which the peak width of the MTF is the narrowest.

The optical unit 33 mounted to the image reading unit 13 reads an original document when the original document is copied. At this time, light is irradiated on the document surface from the light source 34. After the reflected light from the document surface is reflected on the first mirror 35, the second mirror 36 and the third mirror 37 in sequence, the reflected light is imaged on the image pick-up device 39 through the lens unit 38. In a case where the number of document sheets to be read is large, for example, the temperature of the image pick-up device 39 rises. Consequently, the holding bracket 41 is affected by the heat from the image pick-up device 39, and therefore expands. Furthermore, the focal length of the optical unit 33 is affected by the heat from the image pick-up device 39, and therefore becomes long. The displacement amount of the focal length of the optical unit 33 is set so as to correspond to the expansion amount of the holding bracket 41 as described above. Accordingly, in the optical unit 33, even if the temperature rises, an image is appropriately formed on the image pick-up device 39.

According to the exemplary embodiment, a direction of the fluctuation of the focal length of the lens unit 38 caused by the temperature fluctuation and a direction of the fluctuation of the distance between the image pick-up device 39 and the lens unit 38 caused by the temperature fluctuation are configured to be the same direction. Accordingly, even if the temperature fluctuates, the lens unit 38 may be able to form an image on the image pick-up device 39 so that a problem such as a decrease in the MTF due to a displacement of the imaging position may be prevented. Accordingly, favorable image information may be obtained. Therefore, even if the holding bracket 41 which holds the lens unit 38 and the image pick-up device 39 is thermally expanded, deterioration of the image reading accuracy may be prevented.

Both the direction of the fluctuation of the focal length of the lens unit 38 caused by the heat and the direction of the fluctuation of the distance between the image pick-up device 39 and the lens unit 38 are configured to be the direction of increase. Consequently, the focal length of the lens unit 38 normally increases due to the heat generated from the optical unit 33, the image reading unit 13 equipped with the optical unit 33 and the image forming unit 14. The distance between the image pick-up device 39 and the lens unit 38 also increases. Therefore, even if the holding bracket 41 which holds the lens unit 38 and the image pick-up device 39 is thermally expanded, the deterioration of the image reading accuracy may be prevented.

According to the exemplary embodiment, the difference between the fluctuation of the focal length of the lens unit 38 caused by the heat and the fluctuation of the distance between the image pick-up device 39 and the lens unit 38 caused by the heat is configured to be less than the effective focal depth of the lens unit 38. Accordingly, even if there is a difference between the focal length of the lens unit 38 and the distance between the image pick-up device 39 and the lens unit 38, the difference falls within a range of the effective focal depth of the lens unit 38. Therefore, even if the temperature fluctuates, the lens unit 38 may practically be able to form an image on the image pick-up device 39, thereby preventing a decrease in the MTF which may cause a problem to the extent of image characteristics.

According to the exemplary embodiment, the holding bracket 41 is made of the sheet metal member so that the expansion caused by the heat may be suppressed to approximately the half the amount when compared with a case in which the holding bracket 41 is made of a resin mold member. Therefore, the expansion of the holding bracket 41 caused by the effect of heat may be prevented.

Furthermore, according to the exemplary embodiment, the holding bracket 41 is formed of a black steel plate so that the flair light which adversely affects the quality of the read image may be suppressed.

According to the exemplary embodiment, the lens unit 38 reads full color including the three wavelengths of RGB. The difference between the fluctuation of the focal length of all three wavelength of RGB of the lens unit 38 caused by the heat and the fluctuation of the distance between the image pick-up device 39 and the lens unit 38 caused by the heat is configured to be less than the effective focal depth of the lens unit 38. Accordingly, in the optical unit 33 which reads full color and may not be able to obtain a favorable read image if the MTF of any one of the wavelengths decreases, the three wavelengths of RGB of the lens unit 38 may be imaged on the image pick-up device 39 even if the temperature fluctuates. Therefore, a problem such as the decrease in the MTF caused by the displacement of the imaging position may be prevented so that favorable image information may be obtained.

According to the exemplary embodiment, in the wavelength in which the peak width of the MTF curve is the narrowest among three wavelengths of RGB read by the lens unit 38, the holding bracket 41 is configured to hold the image pick-up device 39 and the lens unit 38 at the position where the difference between the fluctuation of the focal length of the lens unit 38 caused by the heat, and the fluctuation of the distance between the image pick-device 39 and the lens unit 38 caused by the heat is less than the effective focal depth of the lens unit 38. Consequently, the holding bracket 41 holds the image pick-up device 39 and the lens unit 38 so as to correspond to the wavelength in which the peak width of the MTF curve is the narrowest among three wavelengths of RGB. Therefore, the effect to the image information caused by the decrease in the MTF of the wavelength with the peak width being the narrowest may be minimized, thereby obtaining favorable image information.

Thus, by providing the optical unit 33 having such a structure described above to the image reading unit 13 and the copier 10, the copier 10 which favorably forms an image in the image reading unit 13 and on a recording sheet may be attained.

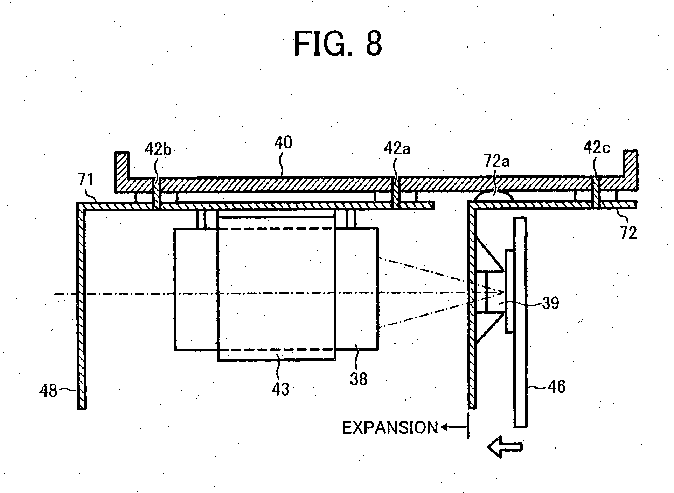

Reference is now made to FIG. 8 to illustrate an optical unit, an image reading apparatus and an image forming apparatus of a second exemplary embodiment of the present invention. The same reference numerals used in the first embodiment will be given to constituent elements such as parts and materials having the same functions, and the descriptions thereof will be omitted.

In FIG. 8, the lens unit 38 is held by a first holding bracket 71 made of a black steel plate through the bracket 43. The image pick-up device 39 is adhered to a second holding bracket 72 made of a black steel plate in the same manner as that of the first exemplary embodiment. The first holding bracket 71 is secured to the supporting bracket 40 by the bolts 42a and 42b. The second holding bracket 72 is secured by a bolt 42c, while a sliding member provided on the second holding bracket 72 maintains a certain gap between the supporting bracket 40 and the second holding bracket 72. Accordingly, the image pick-up device 39 may always correctly face relative to the lens unit 38.

In the optical unit 33 structured in the above described manner, the first holding bracket 71 and the second holding bracket 72, both of which are formed of the black steel plate, thermally expand due to the heat from the image pick-up device 39 as well as the heat from the inside of the image reading unit 13 or from the inside of the copier 10. Since the first holding bracket 71 is positioned between the bolts 42a and 42b which serve as a securing portion to secure the supporting bracket 40, the displacement amount of the lens unit 38 is small. However, the displacement amount of the image pick-up device 39 is large, because the position of the second bracket 72 is determined by the bolt 42c and the sliding member 72a. Mainly due to the effect of the thermal expansion of the holding bracket 72, the image pick-up device 39 comes closer to the lens unit 38 as shown by an outline arrow in FIG. 8. In other words, in a case where the distance between the image pick-up device 39 and the lens unit 38 is determined in a cold period during which the first holding bracket 71 and the second holding bracket 72 are not thermally expanded, the distance between the image pick-up device 39 and the lens unit 38 decreases if the temperature of the first holding bracket 71 and the second holding bracket 72 increases causing the first holding bracket 71 and the second holding bracket 72 to thermally expand.

In the lens unit 38 of the exemplary embodiment, a group of diverging lenses formed of the lenses 52 and 53 is made from plastic having a high temperature dependency. Other lenses 51, 54, 55 and 56 are made of glass having a low temperature dependency. Accordingly, the lens unit 38 is configured such that, in a case where the temperature rises, the focal length thereof may become short. Furthermore, each radius of the lenses 51, 52, 53, 54, 55 and 56 is configured such that in a case where the temperature rises, the displacement amount of the focal length corresponds to the fluctuation amount of the distance between the lens unit 38 and the image pick-up device 39 caused by the heat.

The optical unit 33 of the second exemplary embodiment structured in the above described manner, similarly to the first exemplary embodiment, reads the original document when the original document is copied. At this time, light is irradiated on the document surface from the light source 34. After the reflected light from the document surface is sequentially reflected on the first mirror 35, the second mirror 36 and the third mirror 37, the reflected light is imaged on the image pick-up device 39 through the lens unit 38. In a case where the number of sheets of the document to be read is large, for example, the temperature of the image pick-up device 39 rises. Consequently, the first holding bracket 71 and the second holding bracket 72 are affected by the heat from the image pick-up device 39, and therefore expand. The distance between the lens unit 38 and the image pick-up device 39 becomes short.

Furthermore, the heat from the image pick-up device 39 affects the focal length of the lens unit 38 causing the focal length thereof to extend. The fluctuation amount of the focal length of the optical unit 33 is set so as to correspond to the displacement amount of the image pick-up device 39 caused mainly by the thermal expansion of the second supporting bracket 72. Accordingly, in the optical unit 33, even if the temperature rises, an image is appropriately formed on the image pick-up device 39.

Thus, in the second exemplary embodiment of the present invention, the direction of the fluctuation of the focal length of the lens unit 38 caused by the temperature fluctuation and the direction of the fluctuation of the distance between the image pick-up device 39 and the lens unit 38 caused by the temperature fluctuation are configured to be the same direction. Accordingly, even if the temperature fluctuates, the lens unit 38 may still be able to form an image on the image pick-up device 39 so that a problem such as a decrease in the MTF due to a displacement of the imaging position may be prevented. Accordingly, favorable image information may be obtained. Therefore, even if the first holding bracket 71 and the second holding bracket 72, which hold the lens unit 38 and the image pick-up device 39, are thermally expanded, the deterioration of the image reading accuracy may be prevented.

As described above, the optical unit, the image reading apparatus and the image forming apparatus of the present invention may prevent the deterioration of the reading accuracy of an image, even if the holding members which hold the lens unit and the image pick-up device are thermally expanded. The optical unit, the image reading apparatus and the image forming apparatus of the exemplary embodiments of the present invention may be applied to an optical unit which forms an image on the image pick-up device and converts the reflected light to electric signals after the reflected light from the document is focused by the lenses, to the image reading apparatus such as a scanner using the optical unit, and to the image forming apparatus including the image reading apparatus.

Embodiments of this invention may be conveniently implemented using a conventional general purpose digital computer programmed according to the teachings of the present specification, as will be apparent to those skilled in the computer art. Appropriate software coding can readily be prepared by skilled programmers based on the teachings of the present disclosure, as will be apparent to those skilled in the software art. Embodiments of the present invention may also be implemented by the preparation of application specific integrated circuits or by interconnecting an appropriate network of conventional component circuits, as will be readily apparent to those skilled in the art.

Any of the aforementioned methods may be embodied in the form of a system or device, including, but not limited to, any of the structure for performing the methodology illustrated in the drawings.

Further, any of the aforementioned methods may be embodied in the form of a program. The program may be stored on a computer readable media and is adapted to perform any one of the aforementioned methods, when run on a computer device (a device including a processor). Thus, the storage medium or computer readable medium, is adapted to store information and is adapted to interact with a data processing facility or computer device to perform the method of any of the above mentioned embodiments.

The storage medium may be a built-in medium installed inside a computer device main body or removable medium arranged so that it can be separated from the computer device main body. Examples of the built-in medium include, but are not limited to, rewriteable non-volatile memories, such as ROMs and flash memories, and hard disks. Examples of the removable medium include, but are not limited to, optical storage media such as CD-ROMs and DVDs; magneto-optical storage media, such as MOs; magnetism storage media, such as floppy disks (trademark), cassette tapes, and removable hard disks; media with a built-in rewriteable non-volatile memory, such as memory cards; and media with a built-in ROM, such as ROM cassettes.

Example embodiments being thus described, it will be obvious that the same may be varied in many ways. Such variations are not to be regarded as a departure from the scope of the present invention, and all such modifications as would be obvious to one skilled in the art are intended to be included within the scope of the following claims.

## Claims

1. An optical unit (33), comprising:
an image pick-up device (39) configured to convert a reflected light reflected from an original document to an electric signal, after the light is irradiated on the original document from a light source;
a lens unit (38) configured to read full-colour including three wavelengths of Red, Green and Blue and image the reflected light on the image pick-up device (39); and
a holding member (41) configured to hold the image pick-up device (39) and lens unit (38);
wherein a focal length of the lens unit (38) is adapted to fluctuate in a first direction in response to temperature fluctuations and a distance between the image pick-up device (39) and the lens unit (38) is adapted to fluctuate in a second direction in response to temperature fluctuations and the said first and second direction are aligned with each other; **characterised in that**
the holding member (41) is adapted to constrain the relative separation of the image pick-up device (39) and the lens unit (38) such that the difference between the fluctuation of the focal length of the lens unit (38) caused by temperature fluctuations, and the fluctuation of the distance between the image pick-up device (39) and the lens (38) unit caused by temperature fluctuations is less than the effective focal depth of the lens unit (38) for the one of the three said wavelengths of Red, Green and Blue for which the peak width of the modulation transfer function, MTF, of the reflected light to the image pick-up device (39) is the narrowest;
and **in that** the focal length of the lens unit (38) is adapted to increase in the said first direction in response to an increase in temperature and the distance between the image pick-up device (39) and the lens unit (38) is adapted to increase in the said second direction in response to an increase in temperature.

2. An optical unit (33) according to claim 1, wherein the holding member (41) is made of a sheet metal.

3. An optical unit (23) according to claim 2, wherein the sheet metal member is made of a black steel plate.

4. An image reading apparatus comprising an optical unit according to any preceding claim.

5. An image forming apparatus, comprising:
an image forming mechanism configured to form an image on a recording medium; and
the image reading apparatus of claim 4.

## Patentansprüche

1. Optische Einheit (33), Folgendes umfassend:
eine Bildaufnehmereinrichtung (39), konfiguriert zum Umwandeln eines reflektierten Lichts, das von einem Originaldokument reflektiert wird, in ein elektrisches Signal, nachdem das Licht von einer Lichtquelle auf das Originaldokument gestrahlt wird;
eine Linseneinheit (38), konfiguriert zum Lesen von Vollfarbe einschließlich dreier Wellenlängen von Rot, Grün und Blau und zum Abbilden des reflektierten Lichts auf die Bildaufnehmereinrichtung (39); und
eine Halteglied (41), konfiguriert zum Halten der Bildaufnehmereinrichtung (39) und der Linseneinheit (38);
worin eine Brennweite der Linseneinheit (38) dazu angepasst ist, als Antwort auf Temperaturfluktuationen in einer ersten Richtung zu fluktuieren, und eine Entfernung zwischen der Bildaufnehmereinrichtung (39) und der Linseneinheit (38) dazu angepasst ist, als Antwort auf Temperaturfluktuationen in einer zweiten Richtung zu fluktuieren, und die erste und zweite Richtung aneinander ausgerichtet sind; **dadurch gekennzeichnet, dass**
das Halteglied (41) dazu angepasst ist, die relative Trennung der Bildaufnehmereinrichtung (39) und der Linseneinheit (38) so einzuschränken, dass die Differenz zwischen der Fluktuation der Brennweite der Linseneinheit (38), die durch Temperaturfluktuationen verursacht wird, und der Fluktuation der Entfernung zwischen der Bildaufnehmereinrichtung (39) und der Linseneinheit (38), die durch Temperaturfluktuationen verursacht wird, kleiner ist als die effektive Schärfentiefe der Linseneinheit (38) für die eine der drei Wellenlängen von Rot, Grün und Blau, für die die Spitzenbreite der Modulations-Transfer-Funktion, MTF, des reflektierten Lichts zur Bildaufnehmereinrichtung (39) am schmalsten ist;
und dadurch, dass die Brennweite der Linseneinheit (38) dazu angepasst ist, sich in der ersten Richtung als Antwort auf eine Erhöhung der Temperatur zu vergrößern, und die Entfernung zwischen der Bildaufnehmereinrichtung (39) und der Linseneinheit (38) dazu angepasst ist, sich in der zweiten Richtung als Antwort auf eine Erhöhung der Temperatur zu vergrößern.

2. Optische Einheit (33) nach Anspruch 1, worin das Halteglied (41) aus einem Metallblech hergestellt ist.

3. Optische Einheit (23) nach Anspruch 2, worin das Metallblechglied aus einer schwarzen Stahlplatte hergestellt ist.

4. Bildlesevorrichtung, eine optische Einheit nach einem vorhergehenden Anspruch umfassend.

5. Bildgebende Vorrichtung, Folgendes umfassend:
einen Bildgebungsmechanismus, konfiguriert zur Bildgebung auf einem Auszeichnungsmedium; und
die Bildlesevorrichtung nach Anspruch 4.

## Revendications

1. Unité optique (33), comprenant :
un dispositif de prise d'image (39) configuré pour convertir une lumière réfléchie qui est réfléchie par un document original en un signal électrique, après que la lumière a été rayonnée sur le document original à partir d'une source de lumière ;
une unité d'objectif (38) configurée pour lire la couleur totale comprenant les trois longueurs d'onde du rouge, du vert et du bleu et pour former l'image de la lumière réfléchie sur le dispositif de prise d'image (39) ; et
un élément de support (41) configuré pour supporter le dispositif de prise d'image (39) et l'unité d'objectif (38) ;
dans laquelle une longueur focale de l'unité d'objectif (38) est conçue pour fluctuer dans une première direction en réponse aux fluctuations de température et une distance entre le dispositif de prise d'image (39) et l'unité d'objectif (38) est conçue pour fluctuer dans une deuxième direction en réponse aux fluctuations de température et lesdites première et deuxième directions sont alignées l'une avec l'autre ; **caractérisée en ce que**
l'élément de support (41) est conçu pour limiter la séparation relative du dispositif de prise d'image (39) et de l'unité d'objectif (38) de sorte que la différence entre la fluctuation de la longueur focale de l'unité d'objectif (38) provoquée par les fluctuations de température et la fluctuation de la distance entre le dispositif de prise d'image (39) et l'unité d'objectif (38) provoquée par les fluctuations de température soit inférieure à la profondeur focale effective de l'unité d'objectif (38) pour l'une desdites trois longueurs d'onde du rouge, du vert et du bleu pour laquelle la largeur de raie de la fonction de transfert de modulation, MTF, de la lumière réfléchie vers le dispositif de prise d'image (39) est la plus faible ;
et **en ce que** la longueur focale de l'unité d'objectif (38) est conçue pour augmenter dans ladite première direction en réponse à une augmentation de température et la distance entre le dispositif de prise d'image (39) et l'unité d'objectif (38) est conçue pour augmenter dans ladite deuxième direction en réponse à une augmentation de température.

2. Unité optique (33) selon la revendication 1, dans laquelle l'élément de support (41) est constitué d'une tôle métallique.

3. Unité optique (23) selon la revendication 2, dans laquelle un élément métallique en tôle est constitué d'une plaque en acier noire.

4. Appareil de lecture d'image comprenant une unité optique selon l'une quelconque des revendications précédentes.

5. Appareil de formation d'image, comprenant :
un mécanisme de formation d'image configuré pour former une image sur un support d'enregistrement ; et
l'appareil de lecture d'image selon la revendication 4.
